# EUROPEAN PATENT APPLICATION

(11) **EP 4 707 729 A1**
(43) Date of publication of application: **11.03.2026**
(21) Application number: 24219246.6
(22) Date of filing: 11.12.2024
(51) Int. Cl.: G01B 11/275

(54) **VEHICLE DETECTION APPARATUS AND FOUR-WHEEL ALIGNER**

(30) Priority: 09.09.2024 CN 202411259774
(71) Applicant: Shenzhen Smartsafe Tech Co., Ltd., Shenzhen, Guangdong 518000 (CN)
(72) Inventor: ZHAN, Wei, SHENZHEN, 51800 (CN); WANG, Qingwei, SHENZHEN, 51800 (CN); GU, Shaoli, SHENZHEN, 51800 (CN)
(74) Representative: Cabinet Netter

(57) **Abstract**

A vehicle detection apparatus and a four-wheel aligner are provided. A vehicle detection apparatus, includes: a mounting seat, a first position reference module, a second position detection module, a control module, and at least one image acquisition module. The mounting seat is configured to be arranged on a first side of a vehicle. The first position reference module is installed on the mounting seat and configured to be photographed by a first position detection module of a vehicle detection apparatus arranged at a second side of the vehicle to obtain image information of the first position reference module. The first side and the second side are opposite sides of the vehicle arranged oppositely along a width direction. The at least one image acquisition module is installed on the mounting seat and configured to acquire image information of an auxiliary tool installed on a wheel arranged at the first side. The second position detection module is installed on the mounting seat and configured to acquire image information of a second position reference module of the vehicle detection apparatus arranged at the second side of the vehicle. The control module is electrically connected to the second position detection module and the at least one image acquisition module, and is configured to processes the acquired image information to improve the convenience of operation in the detection operation.

## Description

### TECHNICAL FIELD

The present application relates to the technical field of four-wheel aligners, more particularly to a vehicle detection apparatus and a four-wheel aligner.

### BACKGROUND

With the development of science and technology and economy in China, the number of vehicles owned by residents is growing rapidly, and the detection technology for vehicles is also developing continuously. As an important part of vehicle detection, the detection of vehicle wheel alignment parameters has a significant impact on the safety of the whole vehicle. If the wheel alignment parameters are abnormal, it will lead to a series of economic and safety issues such as abnormal wear of vehicle tires, driving deviation, wheel shimmy, heavy steering, increased fuel consumption, and the like, which directly affect the driving safety and daily use of the vehicle.

At present, the four-wheel aligners on the market include four-wheel alignment measurement devices and four-wheel alignment calibration devices. The number of four-wheel alignment measurement devices corresponds to the number of tires. The four-wheel alignment calibration device is configured to calibrate the four-wheel alignment measurement device, so its number corresponds to the four-wheel alignment measurement. This leads to a large number of components of the four-wheel aligner, resulting in poor portability of the four-wheel aligner, which is not convenient for the operator to use.

### SUMMARY

**It** is an objective of the present application to provide a vehicle detection apparatus and a four-wheel aligner, so as to solve the technical problems of poor integration and portability of four-wheel aligners in related technologies.

To achieve the above purpose, the invention is set out in the appended set of claims.

The above one or more technical solutions in the vehicle detection apparatus and four-wheel aligner provided by the present application have at least one of the following technical effects: the first position reference module, the second position detection module, and the image acquisition module are all installed on the mounting seat, so that the vehicle detection apparatus integrates the first position reference module, the second position detection module, and the image acquisition module, and the integration degree is high. Two vehicle detection apparatuses are placed on both sides of the vehicle, respectively, which can realize the four-wheel alignment detection of the vehicle, reducing the number of devices that need to be used in the four-wheel alignment detection operation of the vehicle. Meanwhile, the reduction in the number of devices that need to be used in the four-wheel alignment detection operation of the vehicle will also simplify the operation steps of the operator and improve the convenience of operation in the detection operation.

### BRIEF DESCRIPTION OF THE DRAWINGS

In order to more clearly illustrate the technical solutions in the embodiments of the present application, the drawings required to be configured in the embodiments will be briefly introduced below. Obviously, the drawings described below are only some embodiments of the present application. For ordinary technicians in this field, other drawings can also be obtained based on these drawings without creative work.
FIG. 1 is a structural schematic diagram of a four-wheel aligner provided by some embodiments of the present application when detecting a vehicle;
**FIG.** 2 is a structural schematic diagram of a vehicle detection apparatus shown in FIG. 1;
FIG. 3 is a first exploded schematic diagram of the vehicle detection apparatus provided in some embodiments of the present application;
FIG. 4 is a second exploded schematic diagram of the vehicle detection apparatus provided in some embodiments of the present application;
**FIG.** 5 is a first structural schematic diagram of the vehicle detection apparatus shown in FIG. 2 with a housing being hidden;
FIG. 6 is a structural schematic diagram of an image acquisition module shown in FIG. 5;
FIG. 7 is an exploded schematic diagram of the image acquisition module shown in FIG. 6;
FIG. 8 is a second structural schematic diagram of the vehicle detection apparatus shown in FIG. 2 with the housing being hidden;

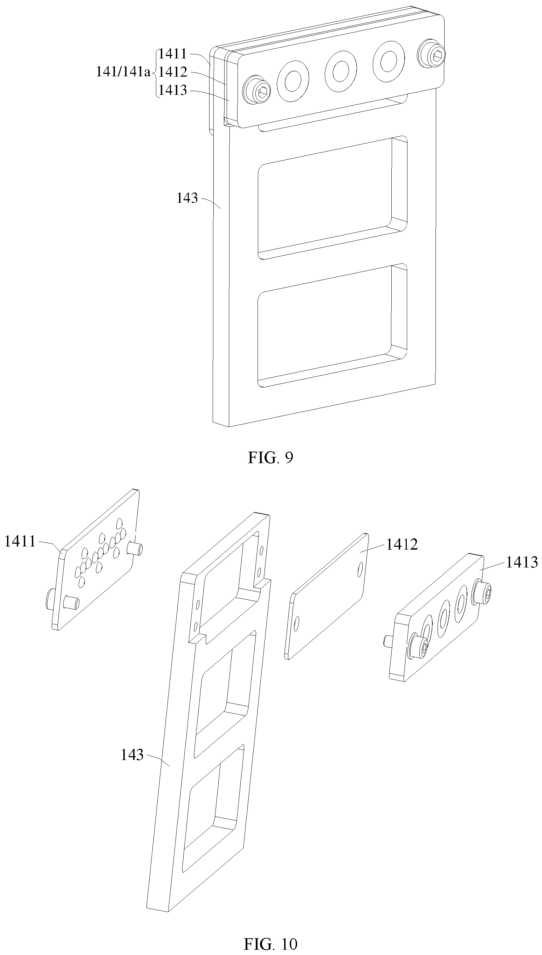

FIG. 9 is a structural schematic diagram of a first position reference module and a third bracket shown in FIG. 8;
FIG. 10 is an exploded schematic diagram of the first position reference module and the third bracket shown in FIG. 9; and
FIG. 11 is a third structural schematic diagram of the vehicle detection apparatus shown in FIG. 2 with the housing being hidden.

In the drawings, the following reference numerals are adopted:
1000, four-wheel aligner; 100, vehicle detection apparatus; 101, first vehicle detection apparatus; 102, second vehicle detection apparatus; 110, mounting seat; 111, base; 111a, magnetic attraction surface; 1111, magnetic attraction member; 1112, indication module; 112, support frame; 113, mounting plate; 1131, mounting surface; 121, image acquisition module; 1211, camera; 12111, lens; 1212, fill light; 12121, substrate; 1212a, through hole; 12122, light-emitting member; 1213, first bracket; 1214, second bracket; 130, control module; 141, first position reference module; 141a, optical calibration member; 1411, light plate; 1412, diffuser plate; 1413, target plate; 14131, calibration zone; 142, second position detection module; 143, third bracket; 144, fourth bracket; 150, housing; 151, housing body; 1511, first housing body; 1512, second housing body; 1513, third housing body; 1514, first window; 1515, second window; 1516, handle; 152, light-transmitting member; 200, auxiliary tool; 300, wheel hub clamping apparatus; 2000, vehicle; 2100, wheel; and 3000, bearing mechanism.

### DETAILED DESCRIPTION OF THE EMBODIMENTS

To clarify the technical problems to be solved by the present application, technical solutions and beneficial effects, the following is a detailed description of the present application in combination with the accompanying drawings and embodiments. It should be understood that the specific embodiments described here are only configured to explain the present application and are not configured to limit the present application.

It should be noted that when an element is described as "fixed" or "arranged" on/at another element, it means that the element can be directly or indirectly fixed or arranged on/at another element. When an element is described as "connected" to/with another element, it means that the element can be directly or indirectly connected to/with another element.

It should be understood that the terms "length", "width", "upper", "lower", "front", "back", "left", "right", "vertical", "horizontal", "top", "bottom", "inside", "outside" and the like indicate positions or positional relationships based on the positions or positional relationships shown in the drawings, and are only for the convenience of describing the present application, rather than indicating that the device or element must have a specific orientation, be constructed and operated in a specific orientation, and therefore cannot be understood as a limitation on the present application.

In addition, the terms "first" and "second" are configured for descriptive purposes only and cannot be understood as indicating relative importance or indicating the number of technical features. In the description of the present application, "multiple" means two or more, unless otherwise clearly and specifically defined. The following is a more detailed description of the specific implementation of the present application in conjunction with specific embodiments.

Embodiments of the present application provide a vehicle detection apparatus, which can be applied in a four-wheel aligner to detect the four-wheel alignment information of the vehicle, such as: a kingpin caster angle, a kingpin inclination angle, a front wheel camber angle, a front wheel toe angle, and other parameters. The vehicle detection apparatus can also be used in other devices for detecting wheels.

Hereinbelow, a four-wheel aligner is taken as an example for explanation.

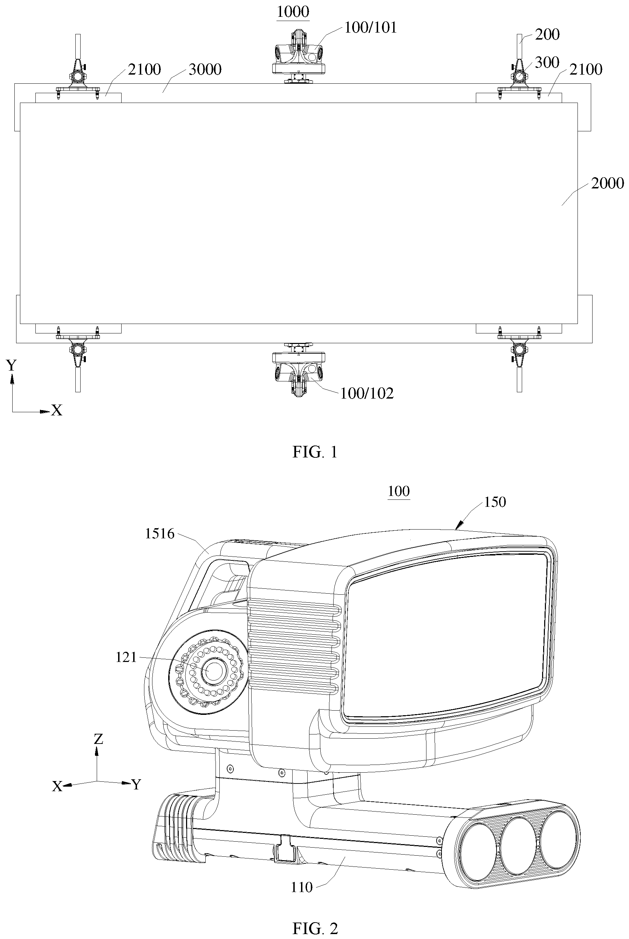

In some embodiments, referring to FIG. 1, a four-wheel aligner 1000 comprises four auxiliary tools 200 and two vehicle detection apparatuses 100. The two vehicle detection apparatuses 100 are respectively installed on left and right sides of the vehicle 2000, and the four auxiliary tools 200 are respectively installed on the four wheels 2100 of the vehicle 2000. The vehicle detection apparatus 100 arranged on the left side of the vehicle 2000 photographs the auxiliary tools 200 on a left front wheel and a left rear wheel of the vehicle 2000, and obtains image information of the auxiliary tools 200 installed on the left front wheel and the left rear wheel of the vehicle 2000. The vehicle detection apparatus 100 arranged on the right side of the vehicle 2000 captures the image information of the auxiliary tools 200 on a right front wheel and a right rear wheel of the vehicle 2000, and the two vehicle detection apparatuses 100 can photograph each other to obtain image information. The four-wheel aligner 1000 obtains the position information of the two vehicle detection apparatuses 100 and the positions of the four wheels 2100 relative to the two vehicle detection apparatuses 100, and further obtains the four-wheel alignment information of the vehicle 2000 based on these position information and the acquired image information.

In some embodiments, each auxiliary tools 200 can be installed on a wheel hub of a wheel 2100 to be tested through a wheel hub clamping apparatus 300, respectively. The stability and reliability of the fixing of the auxiliary tool 200 are conducive to improving the detection accuracy of the four-wheel aligner 1000.

In some embodiments, the auxiliary tool 200 can be a target, such as a self-luminous target, three-dimensional targets, and the like.

In some embodiments, the four-wheel aligner 1000 is configured in conjunction with a bearing mechanism 3000 (for example, a lift, and the like), the vehicle 2000 stops on the bearing mechanism 3000, the bearing mechanism 3000 raises the vehicle 2000 to facilitate the positioning detection of the four-wheel aligner 1000, and the vehicle detection apparatus 100 is installed on the bearing mechanism 3000 to facilitate the installation and fixation of the vehicle detection apparatus 100.

For the convenience of explanation below, a length direction of the vehicle 2000 can refer to an X-axis in the accompanying drawings, a width direction of the vehicle 2000 can refer to a Y-axis in the accompanying drawings, and a height direction of the vehicle 2000 can refer to a Z-axis in the accompanying drawings.

Referring to FIGS. 2 to 5, in some embodiments, a vehicle detection apparatus 100 comprises a mounting seat 110, a first position reference module 141, a second position detection module 142, a control module 130, and at least one image acquisition module 121. The mounting seat 110 is configured to be arranged at a first side of a vehicle 2000. The first position reference module 141 is installed on the mounting seat 110, and the first position reference module 141 is configured to be photographed by a first position detection module of a vehicle detection apparatus 100 arranged at a second side of the vehicle 2000 to obtain image information of the first position reference module 141, and the first side and the second side are opposite sides of the vehicle 2000 that are arranged oppositely along a width direction. The at least one image acquisition module 121 is installed on the mounting seat 110 and is configured to acquire image information of an auxiliary tool 200 installed on a wheel 2100 arranged at the first side. The second position detection module 142 is installed on the mounting seat 110, and the second position detection module 142 is configured to acquire image information of a second position reference module of a vehicle detection apparatus 100 arranged at the second side of the vehicle 2000. The control module 130 is electrically connected to the second position detection module 142 and at least one image acquisition module 121, and is configured to receive the image information of the auxiliary tool 200 and the image information of the second position reference module and to process the image information of the auxiliary tool 200 and the image information of the second position reference module.

The mounting seat 110 may refer to a component configured to support the first position reference module 141, the second position detection module 142, and the image acquisition module 121. The mounting seat 110 may be fixed on a side of the bearing mechanism 3000 (for example: a lift, and the like) to achieve the fixation of the vehicle detection apparatus 100.

The first side and the second side of the vehicle 2000 may refer to the left side and the right side of the vehicle 2000, respectively. When detecting the vehicle 2000, the first side and the second side of the vehicle 2000 are both installed with vehicle detection apparatuses 100. A vehicle detection apparatus 100 arranged at the first side may be referred to as a first vehicle detection apparatus 101, and a vehicle detection apparatus 100 arranged at the second side may be referred to as a second vehicle detection apparatus 102. The first vehicle detection apparatus 101 comprises a second position detection module 142 and a first position reference module 141, and the second vehicle detection apparatus 102 comprises a second position reference module and a first position detection module. The second position detection module 142 and the second position reference module are respectively arranged on opposite sides of the vehicle 2000 and are arranged opposite to each other. The second position detection module 142 shoots the second position reference module to obtain image information of the second position reference module. The second position detection module 142 feeds the obtained image information of the second position reference module to the control module 130 of the first vehicle detection apparatus 101. The control module 130 can receive the image information of the second position reference module and process the image information of the second position reference module to parse out the position information between the first vehicle detection apparatus 101 and the second vehicle detection apparatus 102. The first position detection module and the first position reference module 141 are respectively arranged on opposite sides of the vehicle 2000 and are arranged opposite to each other. The first position detection module shoots the first position reference module 141 to obtain image information of the first position reference module 141. The first position detection module feeds the obtained image information of the first position reference module 141 to the control module 130 of the second vehicle detection apparatus 102. The control module 130 can receive the image information of the first position reference module 141 and process the image information of the first position reference module 141 to obtain the position information between the first vehicle detection apparatus 101 and the second vehicle detection apparatus 102. The position information between the two sets of the first vehicle detection apparatus 101 and the second vehicle detection apparatus 102 can be referenced to each other, thereby improving the accuracy of the position information between the first vehicle detection apparatus 101 and the second vehicle detection apparatus 102.

Optionally, the first vehicle detection apparatus 101 and the second vehicle detection apparatus 102 may be in communication connection, and the control module 130 of the first vehicle detection apparatus 101 and the control module 130 of the second vehicle detection apparatus 102 can obtain the image information of the first position reference module 141 and the image information of the second position reference module, respectively, and process corresponding image information to obtain the position information between the first vehicle detection apparatus 101 and the second vehicle detection apparatus 102.

The second position detection module 142 may refer to a component capable of photographing the image information of the second position reference module. The second position detection module 142 may be, but not limited to, a camera or a camera. For example, the second position detection module 142 may be, but not limited to, an infrared camera or a black and white camera. The first position detection module may refer to a component capable of photographing the image information of the first position reference module 141. The first position detection module may be, but not limited to, a camera 1211 or a camera. For example, the first position detection module may be, but not limited to, an infrared camera or a black and white camera. The structure of the second position detection module 142 may be the same as or different from that of the first position detection module.

The first position reference module 141 may refer to a component that can be photographed by the first position detection module to obtain the image information thereof. For example, the first position reference module 141 comprises a specific pattern or feature point, such as a checkerboard or dot pattern, and the like, that can be captured by the first position detection module and used for calculation. For example, during the detection process, the first position detection module captures the image information of the first position reference module 141, and then extracts the feature information of the specific pattern or feature point in the image information, and calculates the position information between the first vehicle detection apparatus 101 and the second vehicle detection apparatus 102 using the feature information.

The second position reference module may refer to a component that can be photographed by the second position detection module 142 to obtain image information thereof. For example, the second position reference module comprises a specific pattern or feature point, such as a checkerboard or dot pattern, and the like, that can be captured by the second position detection module 142 and used for calculation. For example, during the detection process, the second position detection module 142 captures the image information of the second position reference module, and then extracts the feature information of the specific pattern or feature point in the image information, and calculates the position information between the first vehicle detection apparatus 101 and the second vehicle detection apparatus 102 using the feature information. The structures of the first position reference module 141 and the second position reference module may be the same or different.

The image acquisition module 121 may refer to a component capable of acquiring image information of the auxiliary tool 200 installed on the wheel 2100. The auxiliary tool 200 and the first position reference module 141 may have the same or different structures. The image acquisition module 121 may be a camera, a camera lens, or other component. The image acquisition module 121 captures the image information of the auxiliary tool 200, and the four-wheel alignment information of the vehicle 2000 is determined based on the image information of the second position reference module and the image information of the auxiliary tool 200.

The control module 130 may refer to a component capable of realize data transmission with the second position detection module 142 and the image acquisition module 121. The connection between the control module 130 and the second position detection module 142 and the connection between the control module 130 and the image acquisition module 121 may be realize by a wire harness or in a wireless manner. The control module 130 may receive the image information of the second position reference module fed from the second position detection module 142 and process the image information of the second position reference module. The control module 130 may also receive the image information of the auxiliary tool 200 fed from the image acquisition module 121 and process the image information of the auxiliary tool 200. Herein, "process" may refer to transmitting the received image information to an external device, analyzing the image information by the external device, thereby obtaining the position information between the two vehicle detection apparatuses 100 and the four-wheel positioning information of the vehicle 2000. "Process" may also refer to parsing the received image information, thereby obtaining the position information between the two vehicle detection apparatuses 100 and the four-wheel positioning information of the vehicle 2000. The control module 130 may be, but is not limited to, a control unit (e.g., a mainboard and the like), and may also be a tablet, a mobile phone or other computer device.

In the vehicle detection apparatus 100 of the embodiments of the present application, during detection, the vehicle detection apparatus 100 arranged at the first side of the vehicle 2000 is arranged opposite to the vehicle detection apparatus 100 arranged at the second side of the vehicle 2000, the second position detection module 142 of the vehicle detection apparatus 100 arranged at the first side photographs the second position reference module of the vehicle detection apparatus 100 arranged at the second side to obtain the image information of the second position reference module, and feeds the information to the control module 130. The first position detection module of the vehicle detection apparatus 100 arranged at the second side photographs the first position reference module 141 of the vehicle detection apparatus 100 arranged at the first side to obtain the image information of the first position reference module 141. The image acquisition module 121 of the vehicle detection apparatus 100 photographs the auxiliary tool 200 installed on the wheel 2100 to be tested to obtain image information of the auxiliary tool 200, and feeds the information to the control module 130. The control module 130 receives the image information of the second position reference module and the image information of the auxiliary tool 200, and processes the image information of the second position reference module and the image of the auxiliary tool 200, and finally obtains the four-wheel alignment information of the vehicle 2000.

By adopting the above technical solution of the embodiments of the present application, the first position reference module 141, the second position detection module 142, and the image acquisition module 121 of the vehicle 2000 are all installed on the mounting seat 110, so that the vehicle detection apparatus 100 integrates the first position reference module 141, the second position detection module 142, and the image acquisition module 121, and its integration degree is high. Two vehicle detection apparatuses 100 are placed on both sides of the vehicle 2000, respectively, which can realize the four-wheel alignment detection of the vehicle 2000, reducing the number of devices that need to be used in the four-wheel alignment detection operation of the vehicle 2000. Meanwhile, the reduction in the number of devices that need to be used in the four-wheel alignment detection operation of the vehicle 2000 will also simplify the operation steps of the operator and improve the convenience of operation in the detection operation.

In the vehicle detection apparatus 100 of the embodiments of the present application, when in use, the second position detection module 142 photographs the second position reference module to obtain the image information of the second position reference module, and the first position detection module photographs the first position reference module 141 to obtain the image information of the first position reference module 141. In this way, the position information between the two vehicle detection apparatuses 100 can be obtained by analysis based on the image information of the second position reference module and the image information of the first position reference module 141. During the analysis process, the two image information can be used as a reference to each other, thereby improving the accuracy of determining the position information between the two vehicle detection apparatuses 100 and improving the accuracy of four-wheel alignment detection.

In some embodiments, the vehicle detection apparatus 100 comprises a housing 150, which covers outside the first position reference module 141, the second position detection module 142, and the image acquisition module 121 to protect the first position reference module 141, the second position detection module 142, and the image acquisition module 121. The housing 150 has a first window 1514 and a second window 1515, the first window 1514 is configured for the first position reference module 141 and the second position detection module 142 to be exposed, and the second window 1515 is configured for the image acquisition module 121 to be exposed, thereby facilitating the shooting and acquisition of image information.

In some embodiments, the first position reference module 141 comprises an optical calibration member 141a, and the optical calibration member 141a is configured to be photographed by the first position detection module of the vehicle detection apparatus 100 arranged at the second side of the vehicle 2000, so as to obtain the image information of the optical calibration member 141a.

The optical calibration member 141a may refer to a geometric model of the imaging of the camera 1211 that needs to be established in order to determine the relationship between the three-dimensional geometric position of a point on the surface of a spatial object and its corresponding point in the image. For example, the optical calibration member 141a may refer to a target. The optical calibration member 141a is configured to face he second vehicle detection apparatus 102, that is, the calibration surface of the optical calibration member 141a faces the second vehicle detection apparatus 102, so that the first position detection module can obtain the image information of the calibration surface, thereby calculating and analyzing to obtain the position information between the first vehicle detection apparatus 101 and the second vehicle detection apparatus 102. The calibration surface comprises the specific pattern or feature point that can be captured by the first position detection module and used for calculation.

By adopting the above technical solution, the optical calibration member 141a is configured to obtain the position information between the first vehicle detection apparatus 101 and the second vehicle detection apparatus 102, and its structure is simple. In addition, the method of obtaining the position information by image analysis can reduce the installation accuracy requirements of the two vehicle detection apparatuses 100, as long as the two vehicle detection apparatuses 100 are oppositely installed on the left and right sides of the vehicle 2000, respectively, which can improve the detection efficiency of the four-wheel aligner 1000.

In some embodiments, the optical calibration member 141a is a three-dimensional target.

The three-dimensional target may refer to a calibration surface of the optical calibration member 141a forming a three-dimensional calibration surface.

By adopting the above technical solution, the first position detection module shoots the three-dimensional calibration member to obtain three-dimensional image information, and according to the three-dimensional image information, more accurate position information between the two vehicle detection apparatuses 100 can be parsed, which is conducive to improving the detection accuracy of the vehicle detection apparatus 100.

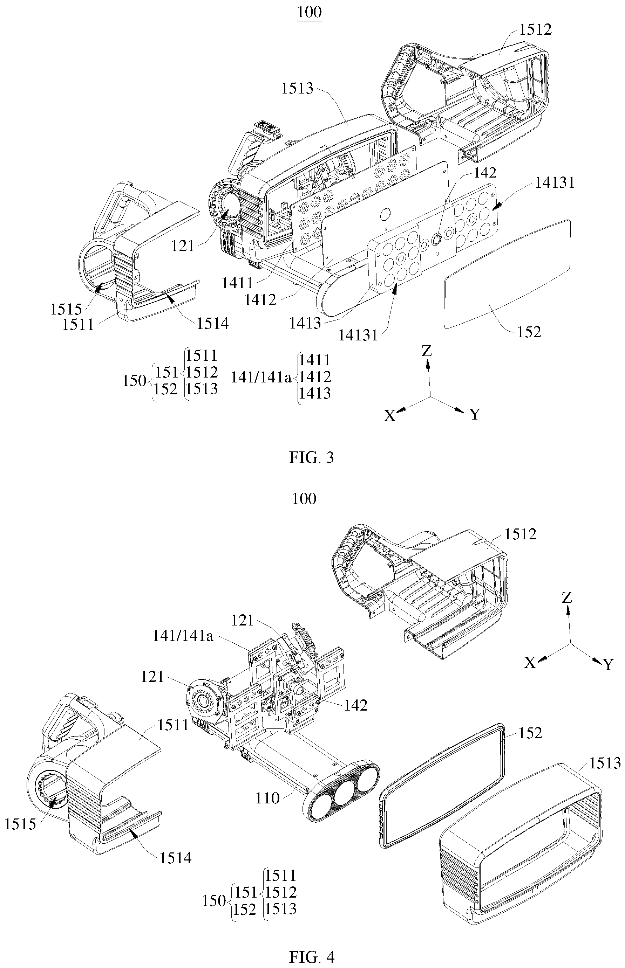

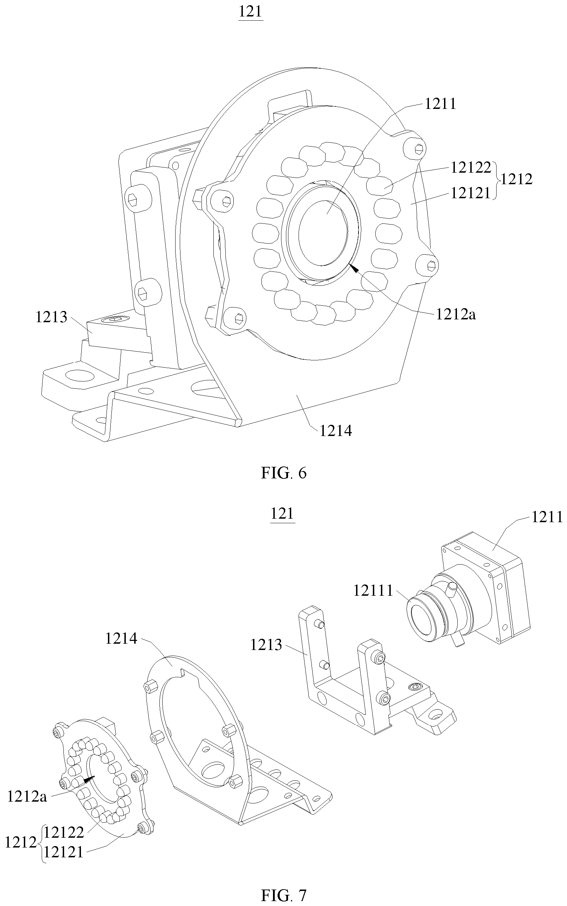

In some embodiments, referring to FIGS. 3 to 7, the optical calibration member 141a comprises: a light plate 1411, a diffuser plate 1412, and a target plate 1413. The light plate 1411, the diffuser plate 1412, and the target plate 1413 are stacked, and the diffuser plate 1412 is arranged between the light plate 1411 and the target plate 1413.

The light plate 1411 may refer to an electronic board for lighting or display, and the light plate 1411 may be, but not limited to, an LED light plate, an LCD backlight light plate, an OLED light plate, a flexible light plate, a UV light plate, and an infrared light plate.

The diffuser plate 1412, also known as a diffuser plate, can evenly scatter light to reduce direct reflection and refraction of light. The diffuser plate 1412 can be made of a material such as a polymethyl methacrylate, a polystyrene, a polycarbonate, and a polypropylene.

The target plate 1413 can refer to a characteristic image or characteristic point that can be photographed by the image acquisition component. The surface of the target plate 1413 facing away from the light plate 1411 forms a calibration surface, and the characteristic image or characteristic point is arranged on the calibration surface for the first position detection module to capture.

In some embodiments, the target plate 1413 is arranged between the first window 1514 and the diffuser plate 1412, so that the target plate 1413 is closest to the first window 1514, so that the first position detection module can capture the characteristic image or characteristic point of the target plate 1413.

By adopting the technical solution of the embodiments of the present application, the light plate 1411, the diffuser plate 1412, and the target plate 1413 are stacked in sequence, so that the light emitted by the light plate 1411 is scattered by the diffuser plate 1412 and then emitted from the target plate 1413. In this way, the light emitted by the target plate 1413 has good uniformity, which is conducive to the first position detection module to obtain clearer image information, and improves the detection accuracy of the four-wheel aligner 1000.

In some embodiments, as shown in FIG. 3, a surface of the target plate 1413 facing away from the light plate 1411 has a plurality of calibration zones 14131, and at least two of the plurality of calibration zones 14131 are spaced apart from the light plate 1411 with different spacings.

It can be understood that the surface of the target plate 1413 facing away from the light plate 1411 is uneven, and the uneven surface is divided into a plurality of calibration zones 14131, each of which has a characteristic image or characteristic point to facilitate the first position detection module to shoot. A distance between at least one calibration zone 14131 and the light plate 1411 is different from a distance between the light plate 1411 of another calibration zone 14131, so that the distance between at least one calibration zone 14131 and the first window 1514 is different from the distance between another calibration zone 14131 and the first window 1514, and the distances from the first position detection module to different calibration zones 14131 are also different.

In some embodiments, the uneven surface is divided into three calibration zones 14131, and the distances from the three calibration zones 14131 to the light plate 1411 are different, and the uneven surface forms a step structure. In other embodiments, the uneven surface can also be other structures.

By adopting the technical solution of the embodiments of the present application, the distances from the light plate 1411 to at least two calibration zones 14131 are different, and a three-dimensional calibration surface can be formed. According to the three-dimensional calibration surface, more accurate position information between the first vehicle detection apparatus 101 and the second vehicle detection apparatus 102 can be analyzed, which is conducive to improving the detection accuracy of the four-wheel aligner 1000.

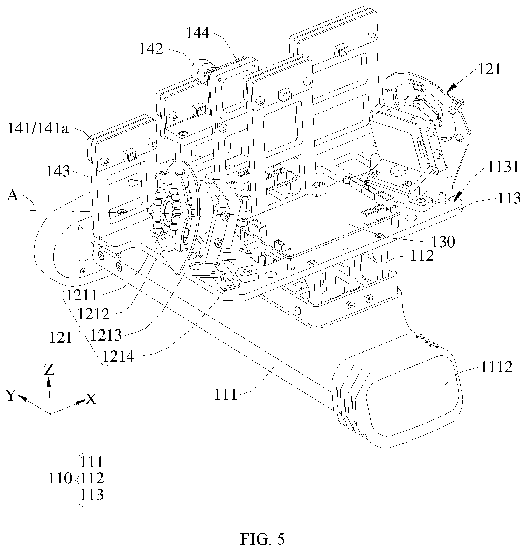

In some embodiments, referring to FIGS. 4 and 5, the optical calibration member 141a is one of a plurality of optical calibration members 141a. Along the width direction of the vehicle 2000, at least two of the plurality of optical calibration members 141a are spaced apart from the vehicle 2000 with different spacings. The at least two of the plurality of optical calibration members 141a which are spaced apart from the vehicle 2000 with the different spacings have projections along the width direction of the vehicle 2000 at least partially not overlap.

The first position reference module 141 may comprise a plurality of optical calibration members 141a, and the first position reference module 141 may also comprise a plurality of optical calibration members 141a. The first position detection module may adopt the following structure, and the second position detection module 142 may also adopt the following structure.

Along the width direction of the vehicle 2000, at least two optical calibration members 141a have different distances from the vehicle 2000. In some embodiments, the first window 1514 is arranged facing the vehicle 2000, the optical calibration members 141a have different distances from the vehicle 2000, and the optical calibration members 141a have different distances from the first window 1514, such that by measuring the distance between the first window 1514 and each of the optical calibration members 141a, it can be determined that the spacings of the optical calibration members 141a to the vehicle 2000 are different. The number of optical calibration members 141a with different distances from the vehicle 2000 may be, but is not limited to, two, three, or four.

The projections of the two optical calibration members 141a which have different distances from the vehicle 2000 along the width direction of the vehicle 2000 at least partially do not overlap. It can be understood that, viewed along the width direction of the vehicle 2000, the optical calibration members 141a with different distances from the vehicle 2000 do not completely overlap, so that the calibration surfaces of the two optical calibration members 141a can form a three-dimensional calibration structure. According to the three-dimensional calibration structure, more accurate position information between the first vehicle detection apparatus 101 and the second vehicle detection apparatus 102 can be parsed, which is conducive to improving the detection accuracy of the four-wheel aligner 1000. In addition, based on the plurality of optical calibration members 141a, the position arrangement of the plurality of optical calibration members 141a is more flexible, and the distance between the optical calibration members 141a can be set larger, so that the calibration structure is more three-dimensional, further improving the accuracy of the position information between the first vehicle detection apparatus 101 and the second vehicle detection apparatus 102, which is conducive to improving the detection accuracy of the four-wheel aligner 1000.

In some embodiments, four optical calibration members 141a are provided. A first optical calibration member 141a and a third optical calibration member 141a are arranged at intervals along a length direction of the vehicle 2000. A second optical calibration member 141a is arranged beneath the first optical calibration member 141a and at a side of the first optical calibration member 141a close to the vehicle 2000, and a fourth optical calibration member 141a is arranged above the first optical calibration member 141a and at a side of the first optical calibration member 141a away from the vehicle 2000.

It can be understood that the number of the optical calibration members 141a is four, and the first optical calibration member 141a and the third optical calibration member 141a are arranged at intervals along the length direction of the vehicle 2000, so that there is a spacing between the first optical calibration member 141a and the third optical calibration member 141a along the length direction of the vehicle 2000. The second optical calibration member 141a is arranged beneath the first optical calibration member 141a, so that there is a height difference between the second optical calibration member 141a and the first optical calibration member 141a along a height direction of the vehicle 2000; and the second optical calibration member 141a is arranged at the side of the first optical calibration member 141a close to the vehicle 2000, so that there is a gap between the second optical calibration member 141a and the first optical calibration member 141a along the width direction of the vehicle 2000. The fourth optical calibration member 141a is arranged above the first optical calibration member 141a, so that there is a height difference between the fourth optical calibration member 141a and the first optical calibration member 141a along the height direction of the vehicle 2000; and the fourth optical calibration member 141a is arranged on the side of the first optical calibration member 141a away from the vehicle 2000, so that there is a gap between the fourth optical calibration member 141a and the first optical calibration member 141a along the width direction of the vehicle 2000, and there is a gap between the fourth optical calibration member 141a and the second optical calibration member 141a along the width direction of the vehicle 2000.

In some embodiments, when viewed along the height direction of the vehicle 2000, the four optical calibration members 141a are distributed up, down, left, and right; when viewed along the width direction of the vehicle 2000, the four optical calibration members 141a are distributed up, down, left, and right.

By adopting the technical solution of embodiments of the present application, the four optical calibration members 141a can form a three-dimensional calibration structure. According to the three-dimensional calibration structure, more accurate position information between the first vehicle detection apparatus 101 and the second vehicle detection apparatus 102 can be parsed, which is beneficial to improving the accuracy of the four-wheel alignment detection of the vehicle 2000. In addition, the above arrangement of the four optical calibration members 141a are distributed make the structure simple and the processing and manufacturing convenient.

In some embodiments, the second position detection module 142 is arranged in a middle of the plurality of optical calibration members 141a.

The second position detection module 142 is arranged at a center position of the arrangement of the plurality of optical calibration members 141a. For example, four optical calibration members 141a are spaced apart along the periphery of the second position detection module 142, the second position detection module 142 is arranged between the first optical calibration member 141a and the third optical calibration member 141a, and the second position detection module 142 is also arranged between the second optical calibration member 141a and the fourth optical calibration member 141a.

By adopting the technical solution of the embodiments of the present application, the second position detection module 142 is arranged in the middle of the multiple optical calibration members 141a. When the first vehicle detection apparatus 101 and the second vehicle detection apparatus 102 shoot each other, the optical calibration member 141a of the first vehicle detection apparatus 101 can be arranged at or close to the center of the shooting field of view of the first position detection module, and the optical calibration member 141a of the second vehicle detection apparatus 102 can be arranged at or close to the center of the shooting field of view of the second position detection module 142. In this way, clearer image information can be obtained, and more accurate position information between the first vehicle detection apparatus 101 and the second vehicle detection apparatus 102 can be parsed, which is conducive to improving the detection accuracy of the four-wheel aligner 1000.

In some embodiments, a light emitted by the optical calibration member 141a is an invisible light.

Invisible light refers to light in the electromagnetic spectrum that cannot be perceived by the human eye. Invisible light can be but is not limited to ultraviolet rays and infrared rays.

By adopting the technical solution of embodiments of the present application, the light emitted by the optical calibration member 141a is invisible light, which can be distinguished from the ambient light, thereby reducing the influence of the ambient light on the light emitted by the optical calibration member 141a, improving the clarity of the image information of the optical calibration member 141a obtained by shooting, and facilitating the improvement of the detection accuracy of the four-wheel aligner 1000.

In some embodiments, referring to FIG. 2 and FIG. 4, the vehicle detection apparatus 100 comprises a housing 150, and the housing 150 comprises a housing body 151 and a light-transmitting member 152. The housing body 151 is mounted on the mounting seat 110, and the optical calibration member 141a is arranged in the housing body 151. A side of the housing body 151 facing the vehicle 2000 defines therein a first window 1514, and the light-transmitting member 152 is mounted at the first window 1514 and seals the first window 1514. The light-transmitting member 152 allows at least part of the light emitted by the optical calibration member 141a to pass therethrough, and the light-transmitting member 152 is able to block at least part of a visible light.

The housing 150 may refer to a housing structure with a hollow interior. The housing 150 comprises a housing body 151 and a light-transmitting member 152. The housing body 151 is hollow inside to form an accommodation space. The optical calibration member 141a is arranged in the accommodation space. A side of the housing body 151 facing the vehicle 2000 defines therein a first window 1514. The first window 1514 is in communication with the accommodation space. The first window 1514 allows light emitted by the optical calibration member 141a to pass through.

The light-transmitting member 152 refers to objects or materials that can transmit light. The material of the light-transmitting member 152 may be, but is not limited to, glass or transparent plastic.

The light-transmitting member 152 allows at least part of the light emitted by the optical calibration member 141a to pass through. It can be understood that the light emitted by the optical calibration member 141a can all pass through the light-transmitting member 152, or part of the light emitted by the optical calibration member 141a passes through the light-transmitting member 152, and the other part of the light does not pass through the light-transmitting member 152, so that the first position detection module can capture the luminous optical calibration member 141a.

The light-transmitting member 152 can block at least part of the visible light. It can be understood that all visible light cannot pass through the light-transmitting member 152 to enter the housing body 151, or a part of the visible light can pass through the light-transmitting member 152 to enter the housing body 151, and the other part of the visible light cannot pass through the light-transmitting member 152 to enter the housing body 151.

By adopting the technical solution of the embodiments of the present application, the light-transmitting member 152 can at least block part of the ambient visible light from entering the housing body 151, which can reduce the influence of the external ambient visible light on the optical calibration member 141a, improve the clarity of the image information of the optical calibration member 141a obtained by shooting, and help improve the detection accuracy of the four-wheel aligner 1000.

In some embodiments, the housing body 151 is provided with a second window 1515, and the second window 1515 can be configured to expose the lens 12111 of the image acquisition module 121, so as to facilitate the image acquisition module 121 to shoot and obtain image information.

In some embodiments, the housing body 151 is formed with a handle 1516 for people to hold, which is convenient for the use of the vehicle detection apparatus 100.

In some embodiments, the housing body 151 may comprise multiple parts, which may be formed separately and then assembled together, or may be formed as a whole.

In some embodiments, the housing body 151 comprises a first housing body 1511 and a second housing body 1512, which are assembled and enclosed to form an installation space for the first position reference module 141, the second position detection module 142, the image acquisition module 121, and the control module 130. The third housing body 1513 is sleeved on the ends of the first housing body 1511 and the second housing body 1512 near the first window 1514 to fix and protect the first housing body 1511 and the second housing body 1512. This design facilitates the assemblage of the vehicle detection apparatus 100.

In some embodiments, referring to FIG. 1, FIG. 4 and FIG. 8, the vehicle detection apparatus 100 comprises two image acquisition modules 121. The two image acquisition modules 121 are installed on the mounting seat 110, and the two image acquisition modules 121 are respectively configured to obtain image information of auxiliary tools 200 installed on two wheels 2100 arranged at the first side.

In the two image acquisition modules 121, one image acquisition module 121 is configured to photograph the auxiliary tool 200 arranged on the front wheel of the first side, and the other image acquisition module 121 is configured to photograph the auxiliary tool 200 arranged on the rear wheel of the first side, so that the image information of the two auxiliary tools 200 arranged at the first side can be obtained.

By adopting the technical solution of the embodiments of the present application, the vehicle detection apparatus 100 can integrate two image acquisition modules 121, which is conducive to improving the integration of the vehicle detection apparatus 100 and facilitating the detection of the vehicle detection apparatus 100. The vehicle detection apparatus 100 can simultaneously obtain the image information of the two auxiliary tools 200 arranged at the first side, thereby improving the detection efficiency of the vehicle detection apparatus 100. In addition, the provision of the two image acquisition modules 121 enables the first vehicle detection apparatus 101 and the second vehicle detection apparatus 102 to be arranged in the middle position of the left and right sides of the vehicle 2000. Compared with the method in which the vehicle detection apparatus 100 is arranged on the front or rear side of the vehicle 2000, the site area required for the detection of the four-wheel aligner 1000 can be reduced, and the detection of the four-wheel aligner 1000 is more convenient and quick.

In some embodiments, a lens 12111 of the image acquisition module 121 is tilted upward toward the vehicle 2000.

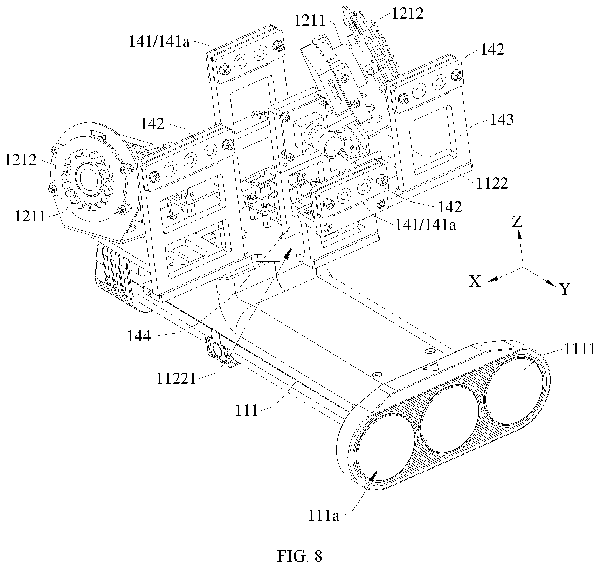

The lens 12111 of the image acquisition module 121 may refer to an optical component composed of a plurality of optical lenses in the image acquisition module 121, and the optical axis of the lens 12111 may refer to the axis of the optical lens, which can be seen from the center line A in FIG. 8. The lens 12111 of the image acquisition module 121 is tilted upward toward the vehicle 2000, and the optical axis of the lens 12111 is also tilted upward toward the vehicle 2000. When the vehicle detection apparatus 100 is in the detection state, the distance between the center of the optical lens closest to the object image side and the vehicle 2000 is less than the distance between the center of the optical lens away from the object image side and the vehicle 2000, and the center of the optical lens closest to the object image side is higher than the center of the optical lens away from the object image side.

By adopting the technical solution of the embodiments of the present application, the lens 12111 of the image acquisition module 121 is arranged facing the vehicle 2000, so that the wheels 2100 of vehicles 2000 of different widths can fall into the field of view of the image acquisition module 121, and the image acquisition module 121 can meet the detection requirements of the wheels 2100 of vehicles 2000 of different widths. Moreover, the lens 12111 of the image acquisition module 121 is tilted upward, so that the wheels 2100 of vehicles 2000 of different heights can fall into the field of view of the image acquisition module 121, and the image acquisition module 121 can meet the detection requirements of the wheels 2100 of vehicles 2000 of different heights. In this way, the four-wheel aligner 1000 can meet the detection requirements of different models, and improve the versatility of the four-wheel aligner 1000.

In some embodiments, the angle between the optical axis of the lens 12111 of the image acquisition module 121 and the horizontal plane ranges from 12.5° to 18.5°.

The angle between the optical axis of the lens 12111 of the image acquisition module 121 and the horizontal plane is α. When the vehicle detection apparatus 100 is in the detection state, α may refer to the angle formed by the optical axis of the lens 12111 of the image acquisition module 121 and the horizontal plane. The horizontal plane may refer to a plane perpendicular to the vertical direction or a plane nearly perpendicular to the vertical direction, and the horizontal plane may refer to the XY plane in FIG. 8.

The design of α ≥ 12.5° enables the lens 12111 of the image acquisition module 121 to tilt upward, which can meet the detection requirements of vehicles 2000 of different heights. The design of α ≤ 18.5° enables the lens 12111 of the image acquisition module 121 to not tilt upward too much, which may otherwise cause the wheel 2100 to be arranged outside the shooting field of view of the image acquisition module 121.

12.5° ≤ α ≤ 18.5°, it can be understood that the value of α can be 12.5°, 18.5° or any value between 12.5° and 18.5°. For example, the value of α can be but is not limited to 12.5°, 13°, 14°, 15°, 16°, 17°, 18°, and 18.5°.

By adopting the technical solution of the embodiments of the present application, the wheels 2100 of most models of different heights can be arranged within the shooting field of view of the image acquisition module 121, so that the vehicle detection apparatus 100 can meet the detection requirements of the wheels 2100 of most models of different heights.

In some embodiments, the angle between the optical axis of the lens 12111 of the image acquisition module 121 and the auxiliary plane is in the range of 14° to 20°, and the auxiliary plane is perpendicular to the width direction of the vehicle 2000.

When the vehicle detection apparatus 100 is in the detection state, the auxiliary plane may refer to a vertical plane perpendicular to or nearly perpendicular to the width direction of the vehicle 2000, and the auxiliary plane may refer to the XZ plane in FIG. 8. The width direction of the vehicle 2000 is parallel to the width direction of the lift, and the width direction of the vehicle 2000 may also refer to the width direction of the lift.

The angle between the optical axis of the lens 12111 of the image acquisition module 121 and the auxiliary plane is β, 14° ≤ β ≤ 20°. It can be understood that the value of β may be 14°, 20°, or any value between 14°and 20°. For example, the value of β may be, but is not limited to, 14°, 15°, 16°, 17°, 18°, 19°, and 20°.

The design of β ≥ 14° enables the lens 12111 of the image acquisition module 121 to tilt toward the vehicle 2000, which can meet the detection requirements of vehicles 2000 of different widths. The design of β ≤ 20°prevents the lens 12111 of the image acquisition module 121 from tilting too much toward the vehicle 2000, causing the wheel 2100 to be arranged outside the shooting field of view of the image acquisition module 121.

By adopting the technical solution of the embodiments of the present application, the wheels 2100 of most models of different widths can be arranged within the field of view of the image acquisition module 121, so that the vehicle detection apparatus 100 can meet the detection requirements of wheels 2100 of most models of different widths.

In some embodiments, the angle between the optical axis of the lens 12111 of the image acquisition module 121 and the horizontal plane ranges from 12.5° to 18.5°, and the angle between the optical axis of the lens 12111 of the image acquisition module 121 and the auxiliary plane ranges from 14° to 20°, and the auxiliary plane is perpendicular to the width direction of the vehicle 2000.

By adopting the technical solution of the embodiments of the present application, the wheels 2100 of most vehicle models can be arranged within the field of view of the image acquisition module 121, so that the vehicle detection apparatus 100 can meet the detection requirements of vehicles 2000 of most vehicle models.

In some embodiments, the image acquisition module 121 comprises a camera 1211 and a fill light 1212, and the fill light 1212 is arranged outside a periphery of the lens 12111 of the camera 1211.

The camera 1211 may refer to a component capable of taking pictures, and the camera 1211 may be, but not limited to, a black and white camera, a color camera, an infrared camera, and the like.

The fill light 1212 may be a lamp capable of emitting light, and the fill light 1212 may be, but not limited to, an LED lamp, an incandescent lamp, and the like The fill light 1212 can provide light to the camera 1211, so that the image information captured by the camera 1211 is clearer, which is conducive to improving the detection accuracy of the vehicle detection apparatus 100.

The fill light 1212 is arranged outside a periphery of the lens 12111 of the camera 1211, and the fill light 1212 is annular in structure and is formed with a through hole 12121a, and the lens 12111 of the camera 1211 is arranged in the through hole 12121a.

In some embodiments, the fill light 1212 is an annular light tube, which is arranged around the lens 12111 of the image acquisition module 121.

In some embodiments, the fill light 1212 comprises a substrate 12121 and a plurality of light-emitting members 12122 installed on the substrate 12121, the substrate 12121 is provided with a through hole 12121a, the lens 12111 of the camera 1211 is penetrated in the through hole 12121a, and the plurality of light-emitting members 12122 are distributed along a periphery of the lens 12111 of the camera 1211.

The substrate 12121 may refer to a plate for supporting the light-emitting member 12122, the substrate 12121 may be a circuit board, the circuit board may provide power to the light-emitting member 12122 and may also support the light-emitting member 12122.

The light-emitting member 12122 may refer to a component capable of emitting light, and the light-emitting member 12122 may be, but is not limited to, an LED, a light bulb, and the like

The through hole 12121a penetrates the two opposite surfaces of the substrate 12121 in the thickness direction, and the lens 12111 of the camera 1211 is accommodated in the through hole 12121a, so that the lens 12111 of the camera 1211 can be exposed from the through hole 12121a, thereby photographing the target calibration member. The optical axis of the lens 12111 of the camera 1211 can coincide with or nearly coincide with the axis of the through hole 12121a, so as to facilitate the subsequent uniform distribution of multiple light-emitting members 12122 on the peripheral side of the lens 12111 of the camera 1211.

The number of light-emitting members 12122 is greater than or equal to two, for example: three, four, five, ten.

A plurality of light-emitting members 12122 are distributed along the periphery of the lens 12111 of the camera 1211, and multiple light-emitting members 12122 are distributed at intervals along the periphery of the lens 12111 of the camera 1211.

In some embodiments, the plurality of light-emitting members 12122 are distributed in a circular array around the axis of the through hole 12121a, and the plurality of light-emitting members 12122 are arranged in a regular manner, and the fill light uniformity of the camera 1211 is good, and the fill light effect is good. The plurality of light-emitting members 12122 can be distributed in one circle or multiple circles.

By adopting the technical solution of the embodiments of the present application, the fill light 1212 is arranged around the lens 12111 of the camera 1211, and light is emitted from the periphery of the lens 12111 of the camera 1211, and the fill light effect is good, which is conducive to improving the clarity of the image information captured by the camera 1211 and improving the detection accuracy of the four-wheel aligner 1000.

In some embodiments, the image acquisition module 121 also comprises a first bracket 1213 and a second bracket 1214 installed on the mounting seat 110 and arranged at intervals, the camera 1211 is installed on the first bracket 1213, and the fill light 1212 is installed on the second bracket 1214.

The first bracket 1213 and the second bracket 1214 are components configured to fix the camera 1211 and the fill light 1212, respectively. The camera 1211 can be fixed to the first bracket 1213 by fasteners (such as screws, bolts, and the like), bonding, clamping, and the like, and the fill light 1212 can be fixed to the second bracket 1214 by fasteners (such as screws, bolts, and the like), bonding, clamping, and the like

For example, the first bracket 1213 can be spliced with multiple components, and the splicing of multiple components can easily form an inclined first fixed surface, and the camera 1211 is installed on the first fixed surface, so that the lens 12111 of the camera 1211 can be installed inclinedly, which reduces the difficulty of installing the camera 1211 and improves the accuracy of the installation position of the camera 1211. The first bracket 1213 can be an integrated structure or other structures.

For example, the second bracket 1214 can be formed by bending a plate, and the bent plate can easily form an inclined second fixed surface, and the fill light 1212 can be installed on the second fixed surface to achieve the inclined installation of the fill light 1212, reducing the difficulty of installing the fill light 1212. The inclination of the fill light 1212 can be adapted to the inclination of the lens 12111 of the camera 1211, which can improve the shooting effect of the camera 1211. In other examples, the second bracket 1214 can also be other structures.

The first bracket 1213 and the second bracket 1214 are arranged at intervals, so that there is a certain gap between the first bracket 1213 and the second bracket 1214, and the two do not contact each other.

By adopting the technical solution of the embodiments of the present application, the first bracket 1213 and the second bracket 1214 are not in contact, the camera 1211 and the fill light 1212 are relatively independently fixed, and the influence of factors such as the shaking of the fill light 1212 on the camera 1211 is reduced, which is conducive to improving the clarity of the image information of the first calibration member captured by the camera 1211 and improving the detection accuracy of the vehicle detection apparatus 100.

In some embodiments, the camera 1211 and the fill light 1212 are installed on the same bracket.

In some embodiments, referring to FIG. 8, the vehicle detection apparatus 100 also comprises a third bracket 143 and a fourth bracket 144 fixed to the mounting seat 110, the optical calibration member 141a is installed on the third bracket 143, and the second position detection module 142 is installed on the fourth bracket 144, thereby realizing the fixation of the optical calibration member 141a and the second position detection module 142.

In some embodiments, the third bracket 143 is arranged between the light plate 1411 and the diffuser plate 1412, and the light plate 1411, the diffuser plate 1412, and the target plate 1413 are fixed to the third bracket 143 together. There is no need to fix the light plate 1411, the diffuser plate 1412, and the target plate 1413 separately, and the fixing of the optical calibration member141a is simpler; the light plate 1411, the diffuser plate 1412, and the target plate 1413 can be fixed to the third bracket 143 by fasteners (e.g., screws, and the like).

In some embodiments, the mounting seat 110 has a mounting surface 1131, and the first position reference module 141, the second position detection module 142, and the image acquisition module 121 are mounted on the mounting surface 1131.

The mounting surface 1131 may refer to the surface of the mounting seat 110 for supporting the first position reference module 141, the second position detection module 142, and the image acquisition module 121. The mounting surface 1131 may be a plane, a stepped surface, and the like

In some embodiments, the third bracket 143, the fourth bracket 144, the first bracket 1213, and the second bracket 1214 can be fixed to the mounting surface 1131 by fasteners (e.g., screws, blots), clamping, bonding, and the like

By adopting the technical solution of the embodiments of the present application, the first position reference module 141, the second position detection module 142, and the image acquisition module 121 are installed on the same surface, which can reduce the installation error among the first position reference module 141, the second position detection module 142, and the image acquisition module 121, which is conducive to improving the accuracy of the relative fixed position between the first position reference module 141, the second position detection module 142, and the image acquisition module 121, and is conducive to improving the detection accuracy of the four-wheel aligner 1000.

In some embodiments, the mounting seat 110 comprises: a base 111, a support frame 112, and a mounting plate 113, and the support frame 112 is connected between the base 111 and the mounting plate 113, so that the base 111 and the mounting plate 113 are arranged at intervals, and the surface of the mounting plate 113 facing away from the support frame 112 forms the mounting surface 1131.

The base 111 may refer to the portion of the mounting seat 110 arranged at the bottom.

The mounting plate 113 may refer to a plate in the mounting seat 110 for supporting the first position reference module 141, the second position detection module 142, and the image acquisition module 121. The mounting plate 113 may be, but is not limited to, a metal plate, a plastic plate, and the like.

The support frame 112 may refer to a portion of the mounting seat 110 connected between the mounting plate 113 and the base 111. The support frame 112 may lift the mounting plate 113 so that a gap is formed between the base 111 and the mounting plate 113. The support frame 112 is a frame structure with a light weight, which is conducive to reducing the weight of the vehicle detection apparatus 100 to facilitate the use of the vehicle detection apparatus 100.

It should be noted that the height of the support frame 112 needs to be reasonably designed so that the first vehicle detection apparatus 101 and the second vehicle detection apparatus 102 can use the space between the bearing mechanism 3000 and a chassis of the vehicle 2000 to shoot each other and reduce occlusion.

By adopting the technical solution of the embodiments of the present application, the first position reference module 141, the second position detection module 142, and the image acquisition module 121 are installed on the mounting plate 113, and the installation operation is simple. The surface of the mounting plate 113 has good flatness. The surface of the mounting surface 1131 facing away from the support frame 112 forms the mounting surface 1131. The mounting surface 1131 has good flatness, which can effectively reduce the installation error of the first position reference module 141, the second position detection module 142, and the image acquisition module 121, which is conducive to improving the accuracy of the relative fixed position between the first position reference module 141, the second position detection module 142, and the image acquisition module 121, and is conducive to improving the detection accuracy of the vehicle detection apparatus 100. In addition, the support frame 112 can raise the second position detection module 142 and the image acquisition module 121, which can enlarge the shooting field of view of the second position detection module 142 and the image acquisition module 121, which is conducive to improving the accuracy of the detection. The support frame 112 and the mounting plate 113 have simple structures and are easy to process and manufacture.

In some embodiments, the mounting surface 1131 is a plane.

By adopting the technical solution of the embodiments of the present application, the first position reference module 141, the second position detection module 142, and the image acquisition module 121 are installed on the same plane, which can effectively reduce the installation error of the first position reference module 141, the second position detection module 142, and the image acquisition module 121, improve the accuracy of the relative fixed positions of the first position reference module 141, the second position detection module 142, and the image acquisition module 121, and help improve the detection accuracy of the vehicle detection apparatus 100. In addition, the installation operation structure of the first position reference module 141, the second position detection module 142, and the image acquisition module 121 is simple, which facilitates the assemblage of the vehicle detection apparatus 100.

In some embodiments, as shown in FIG. 5, the mounting seat 110 has a magnetic attraction surface 111a, and the magnetic attraction surface 111a is configured to be magnetically fixed to a bearing mechanism 3000 which is used to bear the vehicle 2000.

The magnetic attraction surface 111a may refer to the surface of the mounting seat 110 configured for magnetic fixation with the bearing mechanism 3000.

In some embodiments, the mounting seat 110 has a magnetic attraction member 1111, which is exposed on the mounting seat 110, and the magnetic attraction member 1111 is directly adsorbed on the bearing mechanism 3000, and the surface where the magnetic attraction member 1111 contacts the bearing mechanism 3000 is the magnetic attraction surface 111a.

In some embodiments, the mounting seat 110 has a magnetic attraction member 1111, which is mounted inside the mounting seat 110, and the magnetic attraction member 1111 can be magnetically adsorbed on the bearing mechanism 3000 through the mounting seat 110, and a surface of the mounting seat 110 contacting the bearing mechanism 3000 is the magnetic attraction surface 111a.

In some embodiments, the magnetic attraction member 1111 may be, but is not limited to, a magnet or an iron member. When the magnetic attraction member 1111 is a magnet, the bearing mechanism 3000 may be provided with a magnet or an iron member that is magnetically attracted to the magnet. When the magnetic attraction member 1111 is an iron member, the bearing mechanism 3000 is provided with a magnet that is magnetically attracted to the iron member.

In some embodiments, the number of magnetic attraction members may be one or more, for example: two, three, four, and the like. For example, the number of magnetic attraction members 1111 is three, and the three magnetic attraction members 1111 are arranged at intervals along the length direction of the vehicle 2000, and the three magnetic attraction members 1111 are magnetically attracted to the surface of the bearing mechanism 3000 to form a magnetic attraction surface 111a together, so that multi-point magnetic attraction can be formed between the mounting seat 110 and the bearing mechanism 3000, which can improve the connection reliability between the mounting seat 110 and the bearing mechanism 3000.

By adopting the technical solution of the embodiments of the present application, the mounting seat 110 can be magnetically fixed on the bearing mechanism 3000 through the magnetic attraction surface 111a, the fixing stability of the mounting seat 110 is good, the shooting stability of the image acquisition module 121 and the image acquisition member is good, and the clarity of the acquired image information is better, which is conducive to improving the detection accuracy of the four-wheel aligner 1000. In addition, the magnetic connection method is adopted to facilitate the installation and position adjustment of the vehicle detection apparatus 100.

In some embodiments, the magnetic attraction surface 111a, the first position reference module 141, and the second position detection module 142 are arranged on a same side of the mounting seat 110.

By adopting the technical solution of the embodiments of the present application, the magnetic attraction surface 111a, the first position reference module 141, and the second position detection module 142 are arranged on the same side of the mounting seat 110, which can facilitate the use of the vehicle detection apparatus 100.

In some embodiments, the vehicle detection apparatus 100 comprises a battery, which is configured to supply power to the first position reference module 141, the second position detection module 142, the image acquisition module 121, and the control module 130. The battery is arranged in the base 111, so that no external power supply is required, and the detection operation of the vehicle detection apparatus 100 is more convenient. The battery can also supply power to the electronic devices in the vehicle detection apparatus 100, such as: the main board, the camera 1211, the light plate 1411, and the like.

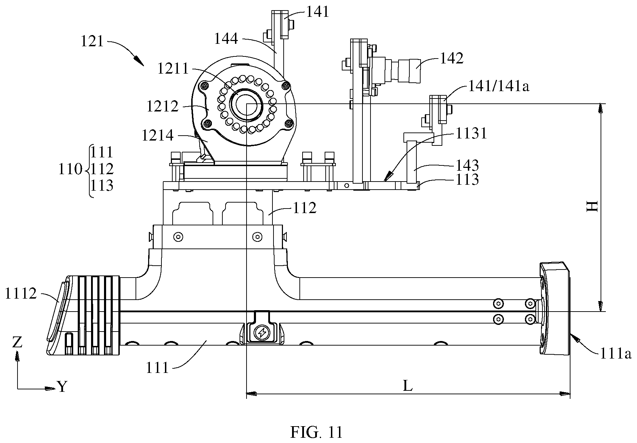

In some embodiments, referring to FIG. 11, the height difference between the lens 12111 of the image acquisition module 121 and the magnetic attraction surface 111a ranges from 100 mm to 160 mm.

The height difference between the lens 12111 of the image acquisition module 121 and the magnetic attraction surface 111a can refer to the height difference between the center of a lens surface of the lens 12111 of the image acquisition module 121 and the center of the magnetic attraction surface 111a.

The height difference between the lens 12111 of the image acquisition module 121 and the magnetic attraction surface 111a is H, where 100 mm ≤ H ≤ 160 mm. The value of H can be 100 mm, 160 mm, or any value between 100 mm and 160 mm. For example, the value of H can be, but is not limited to, 100 mm, 110 mm, 120 mm, 130 mm, 140 mm, 150 mm, and 160 mm.

On the base of the design of H ≥ 100 mm, when the magnetic attraction surface 111a is magnetically attracted to the side of the bearing mechanism 3000, the image acquisition module 121 can be arranged above the bearing platform of the bearing mechanism 3000, which can reduce the obstruction of the bearing mechanism 3000 on the shooting field of view of the image acquisition module 121, which is conducive to the image acquisition module 121 to obtain clear image information and improve the detection accuracy of the vehicle detection apparatus 100. Based on the design of H ≤ 160 mm, the lens 12111 of the image acquisition module 121 is not set too high, which would otherwise cause the target calibration member to be arranged outside the shooting field of view of the image acquisition module 121.

By adopting the technical solution of the embodiments of the present application, it is conducive to the image acquisition module 121 to obtain clear image information and improve the detection accuracy of the four-wheel aligner 1000.

In some embodiments, along the width direction of the vehicle 2000, the distance between the lens 12111 of the image acquisition module 121 and the magnetic attraction surface 111a ranges from 160 mm to 220 mm.

Along the width direction of the vehicle 2000, the distance between the lens 12111 of the image acquisition module 121 and the magnetic attraction surface 111a may refer to the distance between the center of the lens surface of the lens 12111 and the magnetic attraction surface 111a in the width direction of the vehicle 2000.

Along the width direction of the vehicle 2000, the distance between the lens 12111 of the image acquisition module 121 and the magnetic attraction surface 111a is L, where 160 mm ≤ L ≤ 220 mm. The value of L may be 160 mm, 220 mm, or any value between 160 mm and 220 mm. For example, the value of L may be, but is not limited to, 160 mm, 170 mm, 180 mm, 190 mm, 200 mm, 210 mm, and 220 mm.

The design of L≥160 mm makes a distance between the lens 12111 of the image acquisition module 121 and the vehicle 2000, which increases the field of view of the image acquisition module 121 shooting the target calibration member, is conducive to the image acquisition module 121 to obtain clear image information, and can also meet the detection requirements of vehicles 2000 of different widths. The design of L ≤ 220 mm makes the lens 12111 of the image acquisition module 121 not too far away from the vehicle 2000, and enables the image acquisition module 121 to obtain clear image information.

By adopting the technical solution of the embodiments of the present application, it is conducive to the image acquisition module 121 to obtain clear image information and improve the detection accuracy of the vehicle detection apparatus 100.

In some embodiments, the height difference between the lens 12111 of the image acquisition module 121 and the magnetic attraction surface 111a ranges from 100 mm to 160 mm, and along the width direction of the vehicle 2000, the distance between the lens 12111 of the image acquisition module 121 and the magnetic attraction surface 111a ranges from 160 mm to 220 mm.

By adopting the technical solution of the embodiments of the present application, it is beneficial for the image acquisition module 121 to obtain clear image information and improve the detection accuracy of the vehicle detection apparatus 100.

In some embodiments, as shown in FIG. 5, the base 111 is in a long strip shape, one end surface of the base 111 forms a magnetic attraction surface 111a, the support frame 112 is installed at the other end of the base 111, and the image acquisition module 121 and the first position detection module are installed on the support frame 112. During detection, the magnetic attraction surface 111a of the base 111 is adsorbed on the side of the bearing mechanism 3000 and is perpendicular to the side, and the image acquisition module 121 is installed on the support frame 112 arranged at the other end of the base 111, so that there is a certain distance between the lens 12111 of the image acquisition module 121 and the vehicle 2000 in the width direction of the vehicle 2000, so as to facilitate the image acquisition module 121 to obtain clear image information.

In some embodiments, as shown in FIG. 8, the vehicle detection apparatus 100 further comprises an indication module 1112 arranged on the mounting seat 110, the indication module 1112 is electrically connected to the control module 130, and the indication module 1112 is configured to display a working status of the vehicle detection apparatus 100, so as to facilitate the use of the vehicle detection apparatus 100. The indication module 1112 may be, but is not limited to, an indicator light or a display panel.

For example, the indication module 1112 is arranged at the end of the base 111 facing away from the magnetic attraction surface 111a, so as to facilitate the detection personnel to view the indication module 1112.

In some embodiments, as shown in FIG. 1, the four-wheel aligner 1000 comprises the vehicle detection apparatus 100 as in the above-mentioned embodiments.

The four-wheel aligner 1000 of the embodiments of the present application adopts the above-mentioned vehicle detection apparatus 100, which reduces the number of devices that need to be used in the four-wheel alignment detection operation of the vehicle 2000. Meanwhile, the reduction in the number of devices that need to be used in the four-wheel alignment detection operation of the vehicle 2000 will also simplify the operation steps of the operator and improve the convenience of operation in the detection operation.

The above are only preferred embodiments of the present application and are not intended to limit the present application.

## Claims

1. A vehicle detection apparatus, comprising:
a mounting seat, which is configured to be arranged on a first side of a vehicle;
a first position reference module, which is installed on the mounting seat, and configured to be photographed by a first position detection module of a vehicle detection apparatus arranged at a second side of the vehicle to obtain image information of the first position reference module, wherein the first side and the second side are opposite sides of the vehicle arranged oppositely along a width direction;
at least one image acquisition module, which is installed on the mounting seat and configured to acquire image information of an auxiliary tool installed on a wheel arranged at the first side;
a second position detection module, which is installed on the mounting seat and configured to acquire image information of a second position reference module of the vehicle detection apparatus arranged at the second side of the vehicle; and
a control module, which is electrically connected to the second position detection module and the at least one image acquisition module, and is configured to receive the image information of the auxiliary tool and the image information of the second position reference module and to process the image information of the auxiliary tool and image information of the second position reference module.

2. The vehicle detection apparatus according to claim 1, wherein
the first position reference module comprises an optical calibration member; and
the optical calibration member is configured to be photographed by the first position detection module of the vehicle detection apparatus arranged at the second side of the vehicle, so as to obtain the image information of the optical calibration member.

3. The vehicle detection apparatus according to claim 2, wherein the optical calibration member is a three-dimensional target.

4. The vehicle detection apparatus according to claim 2, wherein the optical calibration member comprises: a light plate, a diffuser plate, and a target plate; the light plate, the diffuser plate, and the target plate are stacked; and the diffuser plate is arranged between the light plate and the target plate.

5. The vehicle detection apparatus according to claim 4, wherein a surface of the target plate facing away from the light plate has a plurality of calibration zones, and at least two of the plurality of calibration zones are spaced apart from the light plate with different spacings.

6. The vehicle detection apparatus according to claim 2, wherein
the optical calibration member is one of a plurality of optical calibration members;
along the width direction of the vehicle, at least two of the plurality of optical calibration members are spaced apart from the vehicle with different spacings; and
the at least two of the plurality of optical calibration members which are spaced apart from the vehicle with the different spacings have projections along the width direction of the vehicle at least partially not overlap.

7. The vehicle detection apparatus according to claim 6, wherein
four optical calibration members are provided;
a first optical calibration member and a third optical calibration member are arranged at intervals along a length direction of the vehicle;
a second optical calibration member is arranged beneath the first optical calibration member and at a side of the first optical calibration member close to the vehicle; and
a fourth optical calibration member is arranged above the first optical calibration member and at a side of the first optical calibration member away from the vehicle.

8. The vehicle detection apparatus according to claim 6, wherein the second position detection module is arranged in a middle of the plurality of optical calibration members.

9. The vehicle detection apparatus according to any one of claims 2-8, wherein a light emitted by the optical calibration member is an invisible light.

10. The vehicle detection apparatus according to claim 9, wherein
the vehicle detection apparatus comprises a housing;
the housing comprises a housing body and a light-transmitting member;
the housing body is mounted on the mounting seat, and the optical calibration member is arranged in the housing body;
a side of the housing body facing the vehicle defines therein a first window, and the light-transmitting member is mounted at the first window and seals the first window; and
the light-transmitting member allows at least part of the light emitted by the optical calibration member to pass therethrough, and the light-transmitting member is able to block at least part of a visible light.

11. The vehicle detection apparatus according to any one of claims 1-8, wherein the vehicle detection apparatus comprises two image acquisition modules; and
the two image acquisition modules are installed on the mounting seat, and the two image acquisition modules are respectively configured to obtain image information of auxiliary tools installed on two wheels arranged at the first side.

12. The vehicle detection apparatus according to any one of claims 1-8, wherein
a lens of the image acquisition module is tilted upward toward the vehicle; and/or
the image acquisition module comprises a camera and a fill light, and the fill light is arranged outside a periphery of the lens of the camera; and/or the mounting seat has a magnetic attraction surface, and the magnetic attraction surface is configured to be magnetically fixed to a bearing mechanism which is used to bear the vehicle.

13. The vehicle detection apparatus according to claim 12, wherein the magnetic attraction surface, the first position reference module, and the second position detection module are arranged on a same side of the mounting seat.

14. The vehicle detection apparatus according to any one of claims 1-8, wherein the vehicle detection apparatus further comprises an indication module arranged on the mounting seat, the indication module is electrically connected to the control module, and the indication module is configured to display a working status of the vehicle detection apparatus.

15. A four-wheel aligner, comprising the vehicle detection apparatus according to any one of claims 1-14.
